# EUROPÄISCHE PATENTSCHRIFT

(11) **EP 2 596 972 B1**
(45) Veröffentlichungstag und Bekanntmachung des Hinweises auf die Patenterteilung: **18.05.2016**
(21) Anmeldenummer: 12194684.2
(22) Anmeldetag: 28.11.2012
(51) Int. Cl.: B60J 7/22

(54) **Windschutzeinrichtung**
Wind deflector device
Dispositif de protection contre le vent

(30) Priorität: 28.11.2011 DE 102011055784
(43) Veröffentlichungstag der Anmeldung: 29.05.2013
(73) Patentinhaber: iKON Fahrzeug Design und Engineering GbR, 85092 Kösching (DE); FKT GmbH, 85104 Pförring (DE)
(72) Erfinder: Körber, Stefan, 85092 Kösching (DE); Matschat, Dietmar, 85117 Eitensheim (DE)
(74) Vertreter: Schlief, Thomas P.

(56) Entgegenhaltungen:
- EP-A2- 1 201 475
- DE-A1-102004 061 758
- DE-A1-102007 042 952

## Beschreibung

Die Erfindung betrifft eine Windschutzeinrichtung für ein Personenkraftfahrzeug nach dem Oberbegriff des Patentanspruchs 1.

Eine derartige Windschutzeinrichtung ist seit längerem bekannt, beispielsweise aus der DE 10 2004 061 758 A1. Diese Einrichtung ist mit Doppelgelenken ausgestattet, um die zweifache Faltung zu realisieren. Diese Gelenke haben allerdings den Nachteil, dass sie relativ hoch bauen, ihre Verstaubarkeit also nicht optimal ist. Außerdem ist das Doppelgelenk relativ aufwändig. Die DE 10 2007 042 952 A1 vermeidet diesen Nachteil, indem einer der beiden Rahmen vollständig in den anderen Rahmen eintaucht, wobei sich eine Bauhöhe der gesamten Windschutzeinrichtung ergibt, welche dem größten Rahmendurchmesser der beiden Rahmen entspricht. Diese Windschutzeinrichtung hat allerdings den Nachteil, dass der eintauchende Rahmen zwangsläufig schmal ausgeführt sein muss und daher nicht in jedem Fall zum wirksamsten Schutz vor Windverwirbelungen im Falle eines Windschottrahmens oder zur Abdeckung des Fahrgastraums im Falle eines Abdeckungsrahmens geeignet ist.

Aus diesen Nachteilen ergibt sich die Aufgabe, eine Windschutzeinrichtung zur Verfügung zu stellen, bei der eine einfache Konstruktion mit einem kleinen Packmaß, aber ohne geometrische Flächeneinbußen, kombiniert wird.

Diese Aufgabe wird bei einer Windschutzeinrichtung der eingangs genannten Art durch die Merkmale des Patentanspruchs 1 gelöst. Die Vorteile dieser Erfindung liegen insbesondere darin, dass eine doppelt gefaltete Windschutzeinrichtung zur Verfügung gestellt wird, bei der auf technisch aufwändige Doppelgelenke, wie beispielsweise dasjenige der DE 10 2004 061 758 A1, verzichtet werden kann, und gleichzeitig ein kleines Packmaß gekoppelt mit einer großen Flächenabdeckung erzielt werden kann. Im Gegensatz zu den Doppelgelenken kann auf deren komplizierte und viele Bauteile benötigende Längenausgleichseinrichtung zwischen Unter- und Oberrahmen verzichtet werden, die sich notwendigerweise wegen der Doppelgelenke ergeben. Auch ist die erfindungsgemäße Windschutzeinrichtung im Gegensatz zu der Doppelgelenk-Ausführung ohne Probleme synchron zu bedienen.

Durch die breite Ausführung des Windschottrahmens resultiert somit ein über die Fahrzeugbreite gesehen großer Windschutz, der bei der Ausführung gemäß der DE 10 2007 042 952 A1 nicht erzielt werden kann. Zudem kann durch die erfindungsgemäße Ausgestaltung - ebenfalls im Gegensatz zu der DE 10 2007 042 952 A1 - der erste Rahmen nicht durch den zweiten Rahmen hindurchgedrückt werden, wodurch das Netz sich übermäßig dehnen würde und seine Elastizität einbüßen könnte. Zudem ergibt sich verglichen mit der DE 10 2007 042 952 A1 der Vorteil, dass der Windschottrahmen in Zwischenposition der Windschutzeinrichtung sowohl von der Fahrzeugaußenseite als auch vom Fahrer- bzw. Beifahrersitz aus in einfacher Weise, vorzugsweise an dem für den Bediener nächstgelegenen Längsabschnitt des Windschottrahmens, ergriffen werden kann, um ihn in die Gebrauchsposition aufzurichten. Würde der Windschottrahmen in Gänze im Abdeckungsrahmen eintauchen, wäre ein solches Ergreifen und Aufrichten kompliziert und mühsam.

Unter dem Begriff "Eintauchen" ist der Verlauf derjenigen Querabschnitte des ersten Teilrahmens gemeint, die in der Zwischenposition die Ebene des zweiten (aufgeklappten) Teilrahmens schneiden und dann ggf. in Richtung auf die Klappachsen der beiden Teilrahmen im zweiten Rahmen verlaufen.

Vorteilhafterweise ist der erste Rahmen als Windschottrahmen zum im Wesentlichen senkrechten Aufstellen im Fahrzeug ausgebildet, während der zweite Rahmen als ein Abdeckungsrahmen zum Abdecken des Fahrzeuginnenraums hinter Fahrer- und Beifahrersitz ausgeführt ist. In diesem Fall werden beim ersten Faltvorgang der Windschutzeinrichtung aus der Gebrauchsstellung in die Zwischenstellung die Längsabschnitte des Windschottrahmens oberhalb der oder sogar auf die Längsabschnitte des Abdeckungsrahmens abgelegt.

Wenn es die Fahrzeuggegebenheiten erlauben, können die Längsabschnitte des ersten Rahmens (Windschottrahmen) auf einem Großteil ihrer Länge bündig mit den Längsabschnitten des zweiten Rahmens (Abdeckungsrahmen) abschließen oder über diesen überstehen. Im Gebrauchszustand kann dann auf sehr großer Breite der Wind umgelenkt und damit der Fahrkomfort deutlich erhöht werden. Bei einem besagten Überstand erstreckt sich die Flachmaterialbahn des ersten Rahmens (Windschottrahmen) über den Längsabschnitt des zweiten Rahmens (Abdeckungsrahmen).

Auch ist es möglich und kann bevorzugt sein, dass auch Bereiche der Querabschnitte des ersten Rahmens, bevor diese Querabschnitte in den zweiten Rahmen eintauchen, bündig mit den Querabschnitten des zweiten Rahmens abschließen oder nach außen über diese überstehen. Eine solche Konstruktion erhöht ebenfalls die vom ersten Rahmen abgedeckte Windaufprall- und -umlenkfläche.

Vorzugsweise nehmen sowohl in der Gebrauchsposition als auch in der Zwischenposition (d.h. im abgelegten Zustand des ersten Rahmens auf dem zweiten Rahmen) zumindest die mit den Schwenkscharnieren verbundenen Enden der Querabschnitte der beiden Teilrahmen des ersten Rahmens einen Winkel (α) von kleiner 180° ein. Die einander zugewandten Enden der entsprechenden Querabschnitte bilden somit ein symmetrisches "V". In der besagten Zwischenposition ragen die beiden Schenkel des "V" in der Vorderansicht vorzugsweise aus dem zweiten Rahmen heraus.

Eine bevorzugte diesbezügliche Weiterbildung der Erfindung zeichnet sich dadurch aus, dass die Querabschnitte des ersten Rahmens über im Wesentlichen ihre gesamte Länge in Zwischenposition der Windschutzeinrichtung bei einer Querschnittansicht durch die Windschutzeinrichtung in Fahrzeugquerrichtung schräg zu den Querabschnitten dieses zweiten Rahmens verlaufen. Hierdurch ergibt sich eine symmetrische V-Form dieser Querabschnitte der beiden Teilrahmen des ersten Rahmens. Hierbei ist vorzugsweise die eine Hälfte der im ersten Rahmen eingespannten Flachmaterialbahn um den besagten Winkel gegenüber der anderen Hälfte der Flachmaterialbahn geneigt, wobei die beiden Flachmaterialbahnhälften bevorzugt eine zum zweiten Rahmen symmetrische V-Stellung einnehmen. Hierbei kann der eingeschlossene Winkel sowohl der besagten Querabschnitte des ersten Rahmens sowie der Flachmaterialbahnhälften bei wenigen Grad oder sogar Zehntel Grad liegen. Eine solche Abwinklung kann dem Konturenverlauf der Sitze entsprechen und verleiht der Windschutzeinrichtung zudem eine dynamischere Optik.

Die Querabschnitte der beiden Teilrahmen des ersten Rahmens können alternativ auch andere Konturverläufe aufweisen. In Gebrauchs- und Zwischenposition können die Querabschnitte - deren Verlauf von außen nach innen betrachtend - zunächst bereichsweise parallel zu den Querabschnitten der beiden Teilrahmen des zweiten Rahmens verlaufen. An diese parallelen Abschnitte schließen sich dann vorzugsweise Bereiche mit schrägem oder bombiertem Verlauf an, welche die in den zweiten Rahmen eintauchenden Bereiche darstellen. Im Anschluss an diese schrägen bzw. bombierten Bereiche, welche die Ebene des zweiten Rahmens schneiden, können sich wiederum bis zu den Klappscharnieren der beiden Teilrahmen erstreckende, zu den benachbarten Querabschnitten des zweiten Rahmens parallel verlaufende Bereiche anschließen. Alternativ erstrecken sich die besagten schrägen oder bombierten Bereiche bis zu den besagten Klappscharnieren.

Der erste und der zweite Rahmen sind bevorzugt über jeweilige Querabschnitte jeden Rahmens miteinander um die besagte Klappachse schwenkbar verbunden. Hierbei sind die beiden Rahmen geschlossen ausgebildet, was der gesamten Windschutzeinrichtung eine große Stabilität gibt. Weiterhin ist es vorteilhaft, wenn bei der genannten Anlenkung der erste Rahmen in Gebrauchsposition auf dem zweitem Rahmen aufsteht. Hierdurch wird die Stabilität weiter erhöht.

Bevorzugt sind in den Längsabschnitten des zweiten Rahmens zum Rahmeninnenraum hin schräg verlaufende Ablageflächen vorgesehen, auf denen die Längsabschnitte des ersten Rahmens auflegbar sind, wenn der erste Rahmen auf den zweiten Rahmen abgelegt wird. Die im Rahmen aufgespannte Flachmaterialbahn kann dann eben ausgebildet sein und ggf. ist auch die Gesamthöhe der in die Zwischenstellung gefalteten Windschutzeinrichtung etwas geringer als die Summe der beiden Rahmenhöhen bzw. -durchmesser. Das Packmaß kann also etwas kleiner als bei den bekannten Windschutzeinrichtungen mit Doppelgelenk sein.

Besonders bevorzugt sind die beiden Teilrahmen des zweiten Rahmens in Gebrauchsposition der Windschutzeinrichtung mittels einer Verriegelungseinrichtung relativ zueinander fixierbar. Damit wird verhindert, dass der zweite Rahmen durch Kraftbeaufschlagung, beispielsweise durch Fahrtwind, aufgefaltet werden kann. Dies erhöht wesentlich die Gebrauchssicherheit. Ist der zweite Rahmen ein Abdeckungsrahmen, bleibt dieser lagesicher über dem hinteren Fahrgastraum.

Bevorzugt ist die Verriegelungseinrichtung schwenkbar am zweiten Rahmen angeordnet. Durch vorzugsweise manuelles Verschwenken der Verriegelungseinrichtung lässt sich so mit einem Handgriff die Verriegelung betätigen bzw. lösen. Eine dementsprechend vorteilhafte Ausführungsform sieht vor, dass die Verriegelungseinrichtung zumindest zwei zueinander bewegliche Verriegelungselemente umfasst, wobei jeweils ein Verriegelungselement an einem Teilrahmen des zweiten Rahmens schwenkbar angeordnet ist, und wobei die beiden Verriegelungselemente selbst mittels eines Gelenks schwenkbar miteinander verbunden sind. In weiterer Ausbildung fallen die Schwenkachse des die beiden Verriegelungselemente verbindenden Drehgelenks in der Zwischen- und Aufbewahrposition der Windschutzeinrichtung mit den Achsen der jeweiligen Schwenkscharniere der Querabschnitte des ersten und zweiten Rahmens zusammen. Bei dieser Ausgestaltung liegen demnach - bei jeweils geschlossenem ersten und zweiten Rahmen - fünf Schwenkachsen auf einer gemeinsamen Achse. Mit dieser Ausgestaltung wird ein Höchstmaß an intuitivem Gebrauchskomfort erreicht, da dem Bediener durch die einzig mögliche Schwenkreihenfolge eine schnelle Erlernbarkeit der Bedienabläufe nahegelegt wird. Komplizierte und damit Fehler zulassende Bedienschritte sind nahezu ausgeschlossen. Zudem ist die derart ausgestaltete Windschutzeinrichtung äußerst kompakt und baut klein.

Im Folgenden wird die Erfindung anhand von Figuren näher erläutert. Es zeigen:
- **Figur 1**: eine Windschutzeinrichtung in Einbauposition (Gebrauchsposition) in einem Cabriolet in Vorderansicht;
- **Figur 2**: eine außerhalb eines Fahrzeugs in Gebrauchsposition aufgefaltete Windschutzeinrichtung in schräger Ansicht;
- **Figur 3**: die Windschutzeinrichtung der Figur 2 in Seitenansicht;
- **Figur 4**: die Windschutzeinrichtung der Figuren 2 und 3 in Draufsicht;
- **Figur 5**: eine perspektivische Draufsicht auf die Windschutzeinrichtung der Figuren 2-4, in Zwischenposition gefaltet;
- **Figur 6**: die Windschutzeinrichtung der Figur 5 in Draufsicht;
- **Figur 7**: die Windschutzeinrichtung der Figuren 5 und 6 in Vorderansicht;
- **Figur 8**: eine Draufsicht auf die Windschutzeinrichtung der Figuren 2-7, in Aufbewahrposition gefaltet;
- **Figur 9**: die Windschutzeinrichtung der Figur 8 in Seitenansicht;
- **Figur 10**: eine perspektivische Ansicht der in Aufbewahrposition gefalteten Windschutzeinrichtung.
- **Figuren 11a, b, c**: eine schematische Darstellung des Konturenverlaufs von verschiedenen möglichen Verläufen von Querabschnitten des ersten Rahmens.

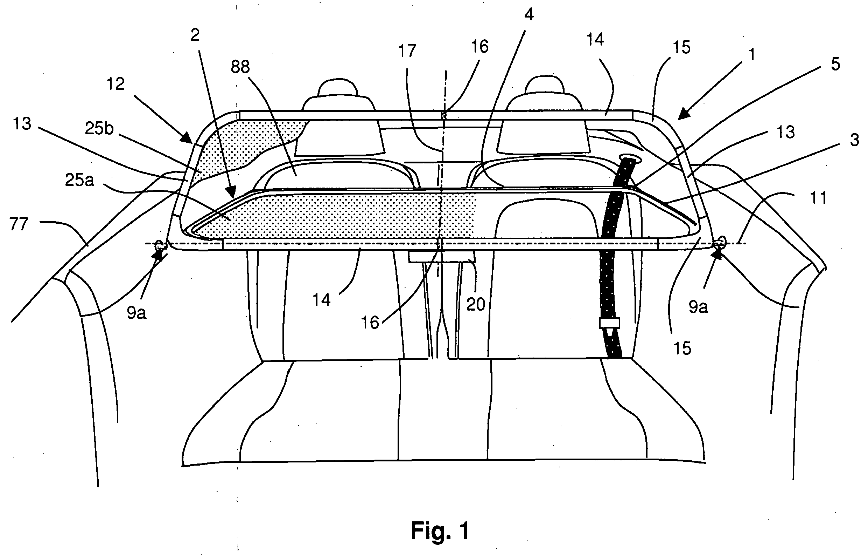

Eine Windschutzeinrichtung 1 entsprechend der Figur 1 umfasst einen als ersten Rahmen 12 ausgebildeten Windschottrahmen 12 und einen als Abdeckungsrahmen 2 ausgebildeten zweiten Rahmen 2, welcher einerseits der Befestigung der Windschutzeinrichtung 1 in dem nur teilweise dargestellten Personenkraftfahrzeug dient, andererseits einen Teilbereich einer Fahrgastraumöffnung des Fahrzeugs abdeckt. Der horizontale Abdeckungsrahmen 2 erstreckt sich im Wesentlichen parallel zu einer Gürtellinie 77 des Kraftfahrzeugs bis hin zu den Lehnen der Rücksitze 88. Der Raum unterhalb des Abdeckungsrahmens 2 kann somit als Stauraum genutzt werden.

Der Windschottrahmen 12 ist mittels eines Klappscharniers 10 um eine Klappachse 11 an dem Abdeckungsrahmen 2 schwenkbar angeordnet. Das Klappscharnier 10 ist in Leisten 8 bzw. 18 eingefasst, die an dem Abdeckungsrahmen 2 bzw. dem Windschottrahmen 12 angebracht sind. In den Figuren 1-3 ist der Windschottrahmen 12 aufgeklappt in Gebrauchsposition dargestellt und erstreckt sich hierbei (Figur 1) im Wesentlichen über die Breite des Insassenraums, wobei er nahezu senkrecht hinter den hier nicht dargestellten Kopfstützen der Vordersitze positioniert ist.

Der Abdeckungsrahmen 2 sowie auch der Windschottrahmen 12 sind weitgehend steif ausgebildet. In beiden Rahmen 12 bzw. 2 sind jeweils windabweisende Flachmaterialbahnen 25a, 25b aufgespannt, welche aus Gründen der Übersichtlichkeit nur zum Teil angedeutet sind. Die Flachmaterialbahnen 25a, 25b sind windabweisend ausgeführt, können jedoch auch aus einem luftdurchlässigen Material wie einem Netz oder Gewirke hergestellt sein.

Um die Windschutzeinrichtung 1 bei Nichtgebrauch platzsparend verstauen zu können, weisen sowohl der Abdeckungsrahmen 2 als auch der Windschottrahmen 12 jeweils mittig zwei Schwenkscharniere 6 bzw. 16 auf, so dass der Abdeckungsrahmen 2 um eine Schwenkachse 7 und der Windschottrahmen 12 um eine Schwenkachse 17 faltbar sind, allerdings erst, wenn der Windschottrahmen 12 auf den Abdeckungsrahmen 2 abgeklappt ist (bzw. umgekehrt) und hierbei die beiden Achsen 7 und 17 zusammenfallen. Nähere Erläuterungen hierzu finden sich weiter unten.

Durch die Schwenkachse 7 ist der Abdeckungsrahmen 2 in zwei Teilrahmen 2a, 2b unterteilt, während der Windschottrahmen 12 durch die Schwenkachse 17 in zwei Teilrahmen 12a, 12b unterteilt ist.

Zur Befestigung der Windschutzeinrichtung 1 in dem Fahrzeug weist es vordere und hintere Fixiereinrichtungen 9a, 9b auf, mittels welcher der Abdeckungsrahmen 2 in dem Fahrzeug fixiert wird. Diese können beispielsweise als ausfahrbare oder starre Stifte ausgebildet sein.

Die beiden Rahmen 2, 12 sind jeweils symmetrisch in zwei Teilrahmen 2a, 2b bzw. 12a, 12b unterteilt, wobei jeder Teilrahmen 2a, 2b bzw. 12a, 12b aus mehreren Abschnitten besteht, die vorliegend als zusammengesteckte und miteinander fest verbundene Teile ausgeführt sind. Wenn in der vorliegenden Darstellung von "Abschnitten" die Rede ist, sind damit generell nicht nur einzelne Teile gemeint, die zu einem Rahmen zusammengefügt sind. Ein Rahmen kann beispielsweise aus einem einzigen Stück gefertigt sein und weist entsprechend der hier verwendeten Terminologie auch in diesem Fall Quer- und Längsabschnitte auf. Die beiden Teilrahmen 2a, 2b bzw. 12a, 12b können zudem aus einer unterschiedlichen Zahl von Einzelteilen gefertigt sein.

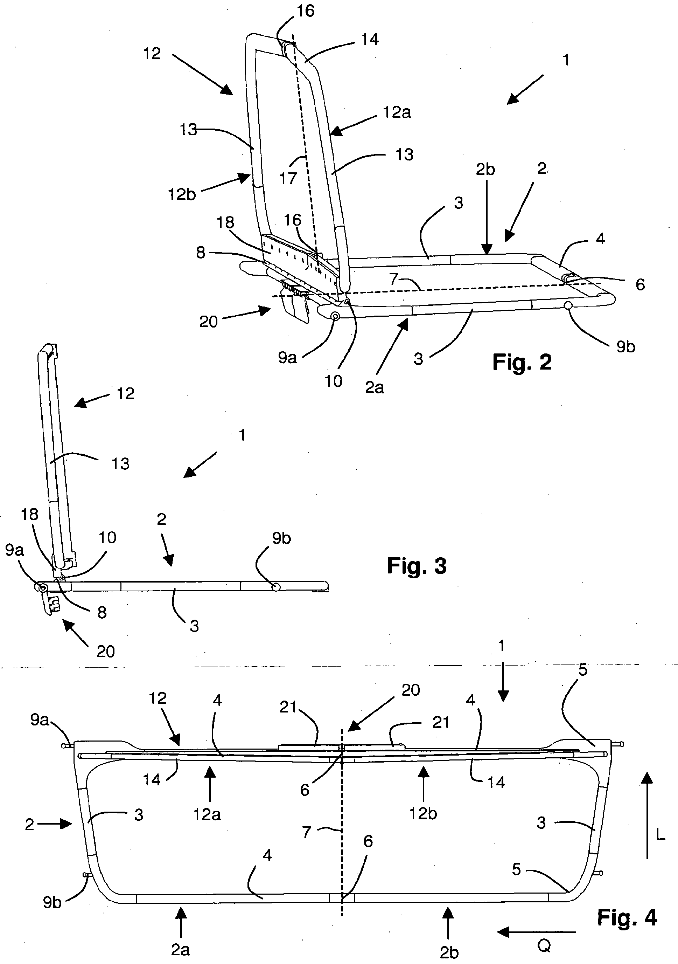

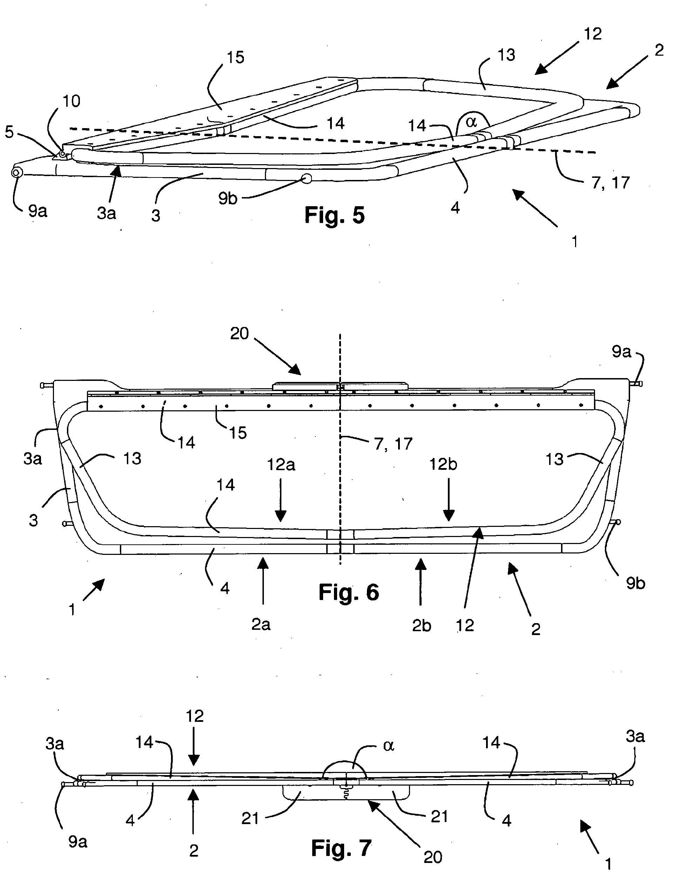

Entsprechend der in den Figuren 1-10 dargestellten Ausführungsform ist jeder Rahmen 2a, 2b, 12a, 12b aus drei verschiedenen Arten von Abschnitten aufgebaut. Im Wesentlichen parallel zur Fahrzeugquerrichtung Q (s. Figur 4) sind dies - bei im Fahrzeug eingebauter Windschutzeinrichtung 1 - bei allen Teilrahmen 2a, 2b, 12a, 12b jeweils Querabschnitte 4, 14, die zu ihren Außenseiten hin in Eckabschnitte 5, 15 übergehen. Die Eckabschnitte 5, 15 ihrerseits gehen wiederum in Längsabschnitte 3, 13 über, die vorliegend - in der Draufsicht auf das Fahrzeug bei abgeklapptem Windschottrahmen 12 - einen spitzen Winkel zur x-Richtung bzw. Längsrichtung L (s. Figur 4) des Fahrzeugs bilden, s. insbesondere Figur 6.

Die Querabschnitte 4, 14, welche im Bereich der Anlenkung des Windschottrahmens 12 an den Abdeckungsrahmen 2 verlaufen, sind mit den schon oben erwähnten Leisten 8 bzw. 18 verbunden. Alternativ können die Querabschnitte 4, 14 auch einstückig mit den Leisten 8, 18 ausgeführt sein.

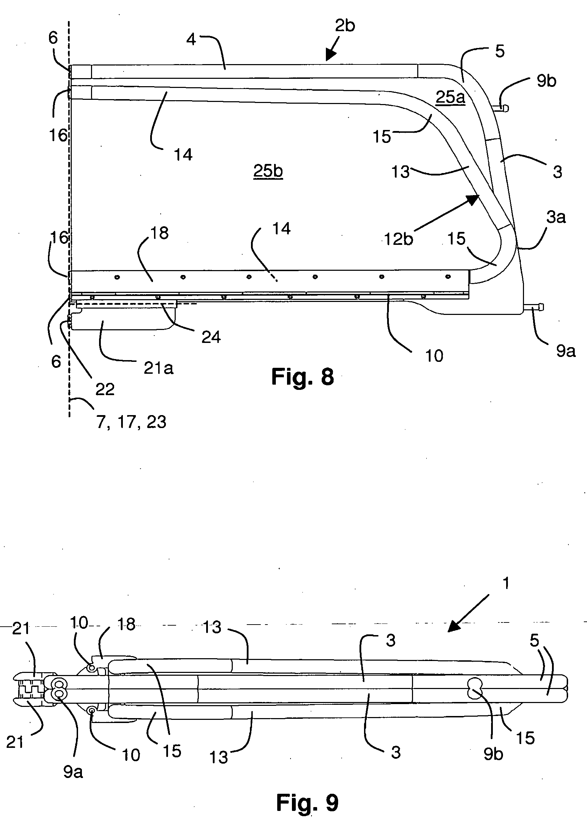

Die Querabschnitte 2a, 2b bzw. 12a, 12b der beiden Teilrahmen 2a und 2b bzw. 12a und 12b sind an ihren einander zugewandten Enden mittels Scharnieren 6 bzw. 16 schwenkbar miteinander verbunden (s. insbesondere Figuren 2 und 8). Hierdurch definieren die beiden Teilrahmen 2a, 2b des zweiten Rahmens 2 eine Schwenkachse 7, während die beiden Teilrahmen 12a, 12b des ersten Rahmens 12 eine Schwenkachse 17 bilden. Einschließlich der Klappung um das Klappgelenk 10, welches die beiden Rahmen 2, 12 miteinander verbindet, lässt sich die Windschutzeinrichtung 1 zweifach klappen, um von der in den Figuren 1-4 dargestellten aufgeklappten Stellung in die in den Figuren 8-10 dargestellte Verstauposition gefaltet zu werden.

Wie insbesondere den Figuren 2 und 3 zu entnehmen ist, steht der Windschottrahmen 12 auf dem Abdeckungsrahmen 2 auf, was der Stabilität der Windschutzeinrichtung 1 insgesamt zugute kommt. Insbesondere kann die auf den Windschottrahmen 12 einwirkende Windkraft gut aufgefangen werden, ohne dass Stabilitätsprobleme auftreten.

Die erfindungsgemäße Windschutzeinrichtung 1 zeichnet sich nun dadurch aus, dass die Längsabschnitte 13 des Windschottrahmens 12 beim Verschwenken aus der vollständig aufgefalteten Stellung (Figuren 1-4) um die Klappachse 11 teilweise auf die Längsabschnitte 3 des Abdeckungsrahmens zweiten Rahmens 2 ablegbar sind (Figuren 5-7). Während die Längsabschnitte 13 des Windschottrahmens 12 nicht - bzw. aufgrund des gegenüber der Fahrzeuglängsrichtung L abgewinkelten Verlaufs kaum - in den aufgeklappten Abdeckungsrahmen 2 eintauchen, tun dies jedoch Bereiche der Querabschnitte 14 und zwar so weit, dass die Schenkachse 17 der Scharniere 16 auf einer gemeinsamen Achse mit der Schwenkachse 7 der Scharniere 6 liegt (s. Figuren 5-7). In diesem Zustand laufen gemäß der vorliegenden Ausführungsform die beiden Querabschnitte 14 der beiden Teilrahmen 12a, 12b schräg aufeinander zu und bilden zueinander ein "V" mit einem stumpfen Winkel α, wie dies insbesondere den Figuren 5 und 7 zu entnehmen ist. Dementsprechend liegen die beiden Flachmaterialbahnen 25a, 25b gemäß der in den Figuren dargestellten Ausführungsform auch nicht in teilweisen parallelen Ebenen, sondern sind ebenfalls unter Bildung des besagten Winkels α symmetrisch zueinander angeordnet. Der Winkel α liegt vorliegend bei ca. 179°.

Die Längsabschnitte 3 des Abdeckungsrahmens 2 weisen zum Rahmeninnenraum hin abgeschrägte Ablageflächen 3a auf, so dass die Längsabschnitte 13 des Windschottrahmens 12 nach Abklappen auf dem Abdeckungsrahmen 2 auf diesen abgelegt werden können (s. insbesondere Figuren 5-7). Dadurch kann die Bauhöhe etwas reduziert werden.

In dem in den Figuren 5-7 dargestellten Zustand können die beiden aufgeklappten Rahmen 2, 12 um die von den Achsen 7, 17 gebildete gemeinsame Achse noch einmal geklappt werden, um die Windschutzeinrichtung 1 von der Zwischenstellung (Figuren 5-7) in die kompakte, zweifach gefaltete Aufbewahr- bzw. Verstauposition zu überführen (s. Figuren 8-10).

Um die beiden Teilrahmen 2a, 2b des Abdeckungsrahmens 2 sicher im Fahrzeug zu befestigen, ist eine Verriegelungseinrichtung 20 vorgesehen, um diese beiden Teilrahmen 2a, 2b in Gebrauchsstellung der Windschutzeinrichtung 1 relativ zueinander zu fixieren. Gemäß der vorliegenden Ausgestaltung umfasst die Verriegelungseinrichtung 20 zwei im Wesentlichen rechteckförmige, leicht mit der Hand zu ergreifende und relativ zueinander bewegliche Verriegelungselemente 21 a, 21 b, die benachbart zueinander im Bereich der Scharniere 6, 16 nahe der Klappachse 11 verlaufend um eine Schwenkachse 24 schwenkbar angeordnet sind. Die beiden Verriegelungselemente 21 a, 21 b, die nahe der Anlenkungsstelle des Windschottrahmens 12 am Abdeckungsrahmen 2 angeordnet und somit zur Montage leicht erreichbar sind, sind hierbei zusätzlich selbst mittels eines Drehgelenks 22 schwenkbar um eine Schwenkachse 23, die senkrecht zur Schwenkachse 24 verläuft, miteinander verbunden. In der hochgeklappten Stellung der Verriegelungselemente 21 a, 21 b fällt die Schwenkachse 23 mit der Schwenkachse 7 des Abdeckungsrahmens 2 zusammen.

Die beiden Verriegelungselemente 21 a, 21 b sind per Hand in zwei verschiedene Funktionspositionen verschwenkbar. Zum einen ist dies die in den Figuren 2-4 dargestellte Verriegelungsstellung. Hierbei sind die Verriegelungselemente 21 a, 21 b aus ihrer waagerechten Stellung um mehr als 90° nach unten verschwenkt, so dass die Schwenkachse 23 einen Winkel von etwas weniger als 90° mit der Schwenkachse 7 des Abdeckungsrahmens 2 einnimmt. In dieser Stellung der Verriegelungselemente 21 a, 21 b kann somit der Abdeckungsrahmen 2 nicht verschwenkt werden und auch nicht um wenige Grad - insbesondere durch Einwirkung von Luftströmungen - nach oben einknicken. Ansonsten könnte der Abdeckungsrahmen 2 und somit die gesamte Windschutzeinrichtung 1 während der Fahrt aus dem Fahrzeug gerissen werden. Vielmehr muss hierzu erst die Schwenkachse 23 der Verriegelungselemente 21 a, 21 b mit der Schwenkachse 7 zusammenfallen.

Diese Situation tritt beim Hochschwenken der beiden Verriegelungselemente 21 a, 21 b ein. Zusätzlich ist der Windschottrahmen 12 vollständig um ca. 90° auf den Abdeckungsrahmen 2 zu schwenken (Figuren 5-7). Dann fallen die Schwenkachse 17 des Windschottrahmens 12, die Schwenkachse 7 des Abdeckungsrahmens 2 sowie die Schwenkachse 23 der Verriegelungselemente 21 a, 21 b zusammen, so dass die Verschwenkung der Windschutzeinrichtung 1 von der in den Figuren 5-7 dargestellten Zwischenposition in die Verstauposition gemäß der Figuren 8-10 möglich ist.

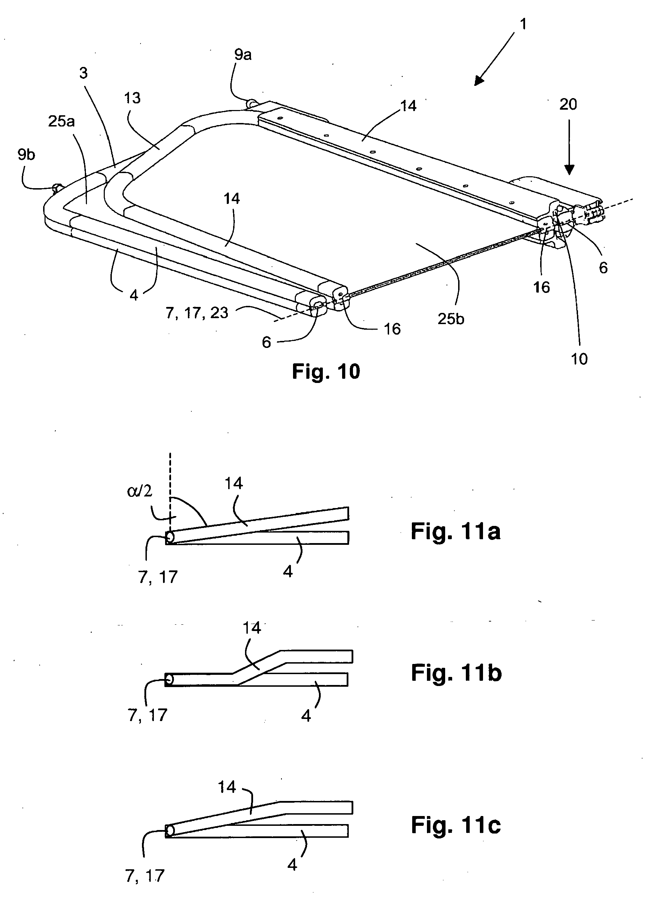

In den Figuren 11a-11c sind schematisch verschiedene Verläufe für die Querabschnitte 14 eines Teilrahmens 12b des ersten Rahmens 12 im Vergleich zu den - vorliegend - geraden Querabschnitten 4 des entsprechenden Teilrahmens 2b des zweiten Rahmens 2 dargestellt. Diese Ansichten sind vertikale Schnitte durch eine Darstellung analog der Figur 6. Mit anderen Worten zeigen die Figuren 11a-11c Schnittvorderansichten (s. Vorderansicht der Fig. 7). In der Figur 11 a ist die Situation der Figuren 2-10 dargestellt, d.h. der hier nur zur Hälfte gezeigte V-förmige Verlauf eines Querabschnitts 4, der daher mit der Vertikalen einen Winkel von α/2 bildet. In der Figur 11b ist ein gestufter Verlauf mit einem schräg verlaufenden mittleren Bereich mit zwei sich jeweils seitlich anschließenden, jeweils parallel zu dem Querabschnitt 4 des zweiten Rahmens 2 verlaufenden Bereichen dargestellt. Figur 11c schließlich zeigt eine Variante mit einem äußeren Bereich des Querabschnitts 14, der parallel zum Querabschnitt 4 verläuft, um anschließend mit einem schräg verlaufenden Bereich in den zweiten Rahmen 2 einzutauchen.

Der schräg verlaufende Bereich endet erst bei der Achse 17, die mit der Achse 7 zusammenfällt.

Wie beispielsweise den Figuren 4, 6 und 8 zu entnehmen ist, ist die Breite des Windschottrahmens 12 im Wesentlichen gleich groß wie die Breite des Abdeckungsrahmens 2. Durch diese breite Ausführung des Windschottrahmens 12 kann ein über die Fahrzeugbreite gesehen größerer Windschutz, im Vergleich zur Windschutzeinrichtung gemäß der DE 10 2007 042 952 A1 erzielt werden. Ebenfalls im Gegensatz zur DE 10 2007 042 952 A1 kann der Windschottrahmen 12 nicht durch den Abdeckungsrahmen 2 hindurchgedrückt werden, so dass die Flachmaterialbahn 25a im Abdeckungsrahmen 2 nicht übermäßig durch den Windschottrahmen 12 gedehnt wird und somit elastisch bleibt. Zudem ist - ebenfalls im Gegensatz zur DE 10 2007 042 952 A1 - ein einfaches Ergreifen eines Längsabschnitts 13 des Windschottrahmens 12 möglich, auch wenn der Windschottrahmen 12 auf dem Abdeckungsrahmen 2 abgelegt ist (Zwischenposition der Windschutzeinrichtung 1). Der Grund liegt darin, dass die Längsabschnitte 13 nicht oder nur teilweise in den Abdeckungsrahmen 2 eintauchen.

Die Erfindung wurde anhand eines Ausführungsbeispiels im Detail beschrieben. Abwandlungen innerhalb der Patentansprüche und für den Fachmann offensichtliche sind prinzipiell ohne Weiteres möglich. Beispielsweise kann der zweite Rahmen als Windschottrahmen und der erste Rahmen als Abdeckungsrahmen ausgebildet sein. Auch kann die Verriegelungseinrichtung 20 an den der Klappachse 11 gegenüberliegenden Querabschnitten des Abdeckungsrahmens 2 angeordnet sein.

### Bezugszeichenliste

- 1: Windschutzeinrichtung
- 2: Abdeckungsrahmen (zweiter Rahmen)
- 2a, 2b: Teilrahmen (des zweiten Rahmens)
- 3: Längsabschnitt
- 3a: Ablagefläche
- 4: Querabschnitt
- 5: Eckabschnitt
- 6: Scharnier
- 7: Schwenkachse
- 8: Leiste
- 9a, 9b: Fixiereinrichtung
- 10: Klappscharnier
- 11: Klappachse
- 12: Windschottrahmen (erster Rahmen)
- 12a, 12b: Teilrahmen (des ersten Rahmens)
- 13: Längsabschnitt
- 14: Querabschnitt
- 15: Eckabschnitt
- 16: Scharnier
- 17: Schwenkachse
- 18: Leiste
- 20: Verriegelungseinrichtung
- 21a, 21b: Verriegelungselemente
- 22: Drehgelenk
- 23: Schwenkachse
- 24: Schwenkachse
- 25a, 25b: Flachmaterialbahn
- 77: Gürtellinie
- 88: Rücksitz

- Q: Fahrzeugquerrichtung
- L: Fahrzeuglängsrichtung

## Patentansprüche

1. Windschutzeinrichtung für ein Personenkraftfahrzeug mit einem in mindestens zwei Teilrahmen (12a, 12b) unterteilten ersten Rahmen (12) und einem in ebenfalls mindestens zwei Teilrahmen (2a, 2b) unterteilten zweiten Rahmen (2), der mit dem ersten Rahmen (12) um eine Klappachse (11) schwenkbar verbunden ist, und mit jeweils innerhalb des ersten und des zweiten Rahmens (12, 2) angeordneten Flachmaterialbahnen (25a, 25b), wobei sowohl der erste Rahmen (12) als auch der zweite Rahmen (2) jeweils zwei Längsabschnitte (13, 3) und zwei sich - in Bezug auf die Einbaugeometrie der Windschutzeinrichtung im Fahrzeug - in Querrichtung (Q) des Fahrzeugs erstreckende Querabschnitte (14, 4) aufweisen, und wobei die Querabschnitte (14, 4) sowohl des ersten Rahmens (12) als auch diejenigen des zweiten Rahmens (2) jeweils durch Schwenkscharniere (16, 6) zumindest zweigeteilt sind, wobei die Windschutzeinrichtung (1) aus einer mindestens zweifach gefalteten Aufbewahrposition in eine Zwischenposition und weiter in eine Gebrauchsposition und wieder zusammenfaltbar ist,
**dadurch gekennzeichnet, dass** beim Schwenken aus der Gebrauchsposition in die Zwischenposition die Längsabschnitte (13) des ersten Rahmens (12) zumindest bereichsweise oberhalb der Längsabschnitte (3) des zweiten Rahmens (2) ablegbar sind, während die Querabschnitte (14) des ersten Rahmens (12) mit einem zumindest bereichsweise schrägen oder bombierten Konturverlauf in den zweiten Rahmen (2) derart eintauchen, dass die Achsen (17, 7) der jeweiligen Schwenkscharniere (16, 6) der Querabschnitte (14, 4) auf einer gemeinsamen Achse (7, 17) zu liegen kommen und somit die beiden Teilrahmen (12, 2) zusammen um diese gemeinsame Achse (7, 17) schwenkbar sind, um die Windschutzeinrichtung (1) in die Aufbewahrposition zu überführen.

2. Windschutzeinrichtung (1) nach Anspruch 1, **dadurch gekennzeichnet, dass** der erste Rahmen (12) ein Windschottrahmen (12) zum Aufstellen im Fahrzeug und der zweite Rahmen (2) ein Abdeckungsrahmen (2) zum Abdecken des Fahrzeuginnenraums hinter Fahrer- und Beifahrersitz ist.

3. Windschutzeinrichtung nach einem der vorhergehenden Ansprüche,
**dadurch gekennzeichnet, dass** in der Zwischenposition die Längsabschnitte (13) des ersten Rahmens (12) auf einem Großteil ihrer Länge bündig mit den Längsabschnitten (3) des zweiten Rahmens (2) abschließen oder über diesen überstehen.

4. Windschutzeinrichtung nach einem der vorhergehenden Ansprüche,
**dadurch gekennzeichnet, dass** Bereiche der Querabschnitte (14) des ersten Rahmens (12), bevor diese Querabschnitte in den zweiten Rahmen (2) eintauchen, bündig mit den Querabschnitten (4) des zweiten Rahmens (2) abschließen oder nach außen über diese überstehen.

5. Windschutzeinrichtung nach einem der vorhergehenden Ansprüche,
**dadurch gekennzeichnet, dass** sowohl in Gebrauchsposition als auch im abgelegten Zustand des ersten Rahmens (12) auf dem zweiten Rahmen (2) (Zwischenposition) zumindest die mit den Schwenkscharnieren (6, 16) verbundenen Enden der Querabschnitte (14) der beiden Teilrahmen (12a, 12b) des ersten Rahmens (12) einen Winkel (α) von kleiner 180° einnehmen, vorzugsweise in einer symmetrischen V-Form.

6. Windschutzeinrichtung nach dem vorhergehenden Anspruch, **dadurch gekennzeichnet, dass** die Querabschnitte (14) der beiden Teilrahmen (12a, 12b) des ersten Rahmens (12) auf ihrer gesamten Länge eine symmetrische V-Form bilden.

7. Windschutzeinrichtung nach einem der vorhergehenden Ansprüche,
**dadurch gekennzeichnet, dass** die Querabschnitte (14) der beiden Teilrahmen (12a, 12b) des ersten Rahmens (12) sowohl in Gebrauchsposition als auch im abgelegten Zustand des ersten Rahmens (12) auf dem zweiten Rahmen (2) (Zwischenposition) von außen nach innen hin zunächst bereichsweise parallel zu den Querabschnitten (4) der beiden Teilrahmen (2a, 2b) des zweiten Rahmens (2) verlaufen, um dann anschließend in Bereiche mit relativ zu den besagten Querabschnitten (4) schrägem oder bombiertem Verlauf überzugehen.

8. Windschutzeinrichtung nach dem vorhergehenden Anspruch, **dadurch gekennzeichnet, dass** die Querabschnitte (14) der beiden Teilrahmen (12a, 12b) des ersten Rahmens (12) zwischen zwei zu den Querabschnitten (4) der beiden Teilrahmen (2a, 2b) des zweiten Rahmens (2) parallelen Verläufen einen schrägen oder bombierten Verlauf aufweisen.

9. Windschutzeinrichtung nach einem der vorhergehenden Ansprüche,
**dadurch gekennzeichnet, dass** der erste Rahmen (12) in Gebrauchsposition auf dem zweiten Rahmen (2) aufsteht.

10. Windschutzeinrichtung nach einem der vorhergehenden Ansprüche,
**dadurch gekennzeichnet, dass** in den Längsabschnitten (3) des zweiten Rahmens (2) zum Rahmeninnenraum hin schräg verlaufende Ablageflächen (3a) vorgesehen sind, an denen die Längsabschnitte (13) des ersten Rahmens (12) zur Anlage kommen.

11. Windschutzeinrichtung nach einem der vorhergehenden Ansprüche,
**dadurch gekennzeichnet, dass** die beiden Teilrahmen (2a, 2b) des zweiten Rahmens (2) in Gebrauchsposition der Wiridschutzeinrichtung (1) mittels einer Verriegelungseinrichtung (20) relativ zueinander fixierbar sind.

12. Windschutzeinrichtung nach einem der vorhergehenden Ansprüche,
**dadurch gekennzeichnet, dass** die Verriegelungseinrichtung (20) schwenkbar am zweiten Rahmen (2) angeordnet ist, wobei vorzugsweise die Verriegelungseinrichtung (20) zumindest zwei zueinander bewegliche Verriegelungselemente (21 a, 21 b) umfasst, wobei beide Verriegelungselemente (21 a, 21 b) jeweils an einem Teilrahmen (2a, 2b) des zweiten Rahmens (2) um eine gemeinsame Schwenkachse (24) schwenkbar angeordnet ist, und wobei die beiden Verriegelungselemente (21 a, 21 b) selbst mittels eines Drehgelenks (22) schwenkbar um eine Schwenkachse (23) miteinander verbunden sind.

13. Windschutzeinrichtung nach einem der vorhergehenden Ansprüche,
**dadurch gekennzeichnet, dass** die Schwenkachse (23) des die beiden Verriegelungselemente (21 a, 21 b) verbindenden Drehgelenks (22) in der Aufbewahrposition mit den Achsen (17, 7) der jeweiligen Schwenkscharniere (16, 6) der Querabschnitte (14, 4) des ersten und zweiten Rahmens (12, 2) auf einer gemeinsamen Achse (7, 17, 23) zu liegen kommen.

## Claims

1. A windscreen device for a passenger car having a first frame (12) divided into at least two subframes (12a, 12b) and a second frame (2) also divided into at least two subframes (2a, 2b) and pivotally connected to the first frame (12) about a folding axis (11), and having flat material webs (25a, 25b) disposed inside each of the first and second frames (12, 2), both the first frame (12) and the second frame (2) each comprising two longitudinal segments (13, 3) and two transverse segments (14, 4) extending in the transverse direction (Q) of the vehicle - with respect to the installed geometry of the windscreen device in the vehicle - and the transverse segments (14, 4) of both the first frame (12) and of the second frame (2) each being divided into at least two by pivot hinges (16, 6), the windscreen device (1) being able to fold out of a storage position folded at least twice into an intermediate position and further into a use position and back again, **characterized in that**, the longitudinal segments (13) of the first frame (12) can be laid down at least regionally above the longitudinal segments (3) of the second frame (2) when pivoting out of the use position into the intermediate position, while an at least regionally angled or arched contour course of the transverse segments (14) of the first frame (12) descend into the second frame (2) such that the axes (17, 7) of each of the pivot hinges (16, 6) of the transverse segments (14, 4) come to lie on a common axis (7, 17) and thus the two subframes (12, 2) are jointly pivotable about said common axis (7, 17) in order to transition the windscreen device (1) into the storage position.

2. The windscreen device (1) according to claim 1, **characterized in that** the first frame (12) is a windblocker frame (12) for erecting in the vehicle and the second frame (2) is a cover frame (2) for covering the interior of the vehicle behind the driver and front passenger seats.

3. The windscreen device according to any one of the preceding claims, **characterized in that** the longitudinal segments (13) of the first frame (12) are flush with the longitudinal segments (3) of the second frame (2) or protrude past the same over a majority of the length thereof in the intermediate position.

4. The windscreen device according to any one of the preceding claims, **characterized in that** regions of the transverse segments (14) of the first frame (12) are flush with the transverse segments (4) of the second frame (2) or protrude past the same toward the outside before said transverse segments descend into the second frame (2).

5. The windscreen device according to any one of the preceding claims, **characterized in that** at least the ends of the transverse segments (14) of the two subframes (12a, 12b) of the first frame (12) connected to the pivot hinges (6, 16) form an angle (α) of less than 180°, preferably in a symmetrical V-shape, both in the use position and in the state of the first frame (12) placed on the second frame (2) (intermediate position).

6. The windscreen device according to the preceding claim, **characterized in that** the transverse segments (14) of the two subframes (12a, 12b) of the first frame (12) form a symmetrical V-shape over the entire length thereof.

7. The windscreen device according to any one of the preceding claims, **characterized in that** the transverse segments (14) of the two subframes (12a, 12b) of the first frame (12), both in the use position and in the state of the first frame (12) placed on the second frame (2) (intermediate position), initially run regionally parallel to the transverse segments (4) of the two subframes (2a, 2b) of the second frame (2) from the outside to the inside in order to then transition to regions having angled or arched courses relative to said transverse segments (4).

8. The windscreen device according to the preceding claim, **characterized in that** the transverse segments (14) of the two subframes (12a, 12b) of the first frame (12) have an angled or arched course between two courses parallel to the transverse segments (4) of the two subframes (2a, 2b) of the second frame (2).

9. The windscreen device according to any one of the preceding claims, **characterized in that** the first frame (12) stands on the second frame (2) in the use position.

10. The windscreen device according to any one of the preceding claims, **characterized in that** contact surfaces (3a) running at an angle toward the interior of the frame are provided in the longitudinal segments (3) of the second frame (2), on which the longitudinal segments (13) of the first frame (12) make contact.

11. The windscreen device according to any one of the preceding claims, **characterized in that** the two subframes (2a, 2b) of the second frame (2) can be fixed relative to each other by means of a latching device (20) in the use position of the windscreen device (1).

12. The windscreen device according to any one of the preceding claims, **characterized in that** the latching device (20) is pivotally disposed on the second frame (2), wherein the latching device (20) preferably comprises at least two latching elements (21 a, 21 b) displaceable relative to each other, wherein each of the two latching elements (21 a, 21 b) is pivotally disposed on a subframe (2a, 2b) of the second frame (2) for pivoting about a common pivot axis (24), and wherein the two latching elements (21 a, 21 b) themselves are pivotally connected to each other about a pivot axis (23) by means of a rotating joint (22).

13. The windscreen device according to any one of the preceding claims, **characterized in that** the pivot axis (23) of the rotating joint (22) connecting the two latching elements (21 a, 21 b) comes to rest in a common axis (7, 17, 23) with the axes (17, 7) of the corresponding pivot hinges (16, 6) of the transverse segments (14, 4) of the first and second frames (12, 2) in the storage position.

## Revendications

1. Dispositif pare-vent pour une automobile comprenant un premier cadre (12) divisé en au moins deux cadres partiels (12a, 12b) et un deuxième cadre (2) lui aussi divisé en au moins deux cadres partiels (2a, 2b), lequel est relié au premier cadre (12) pivotant autour d'un axe de rabattement (11), et comprenant des bandes de matière plates (25a, 25b) respectivement disposées à l'intérieur du premier et du deuxième cadre (12, 2), le premier cadre (12) ainsi que le deuxième cadre (2) possédant respectivement deux portions longitudinales (13, 3) et deux portions transversales (14, 4) qui, en référence à la géométrie de montage du dispositif pare-vent dans le véhicule, s'étendant dans le sens transversal (Q) du véhicule, et les portions transversales (14, 4) aussi bien du premier cadre (12) que celle du deuxième cadre (2) étant respectivement divisées au moins en deux parties par des charnières de pivotement (16, 6), le dispositif pare-vent (1) pouvant être déplié depuis une position de conservation au moins pliée en deux en une position intermédiaire et ensuite en une position d'utilisation et de nouveau replié, **caractérisé en ce que** lors du pivotement depuis la position d'utilisation dans la position intermédiaire, les portions longitudinales (13) du premier cadre (12) peuvent être déposées au moins dans certaines zones au-dessus des portions longitudinales (3) du deuxième cadre (2), alors que les portions transversales (14) du premier cadre (12), ayant un tracé de contour biseauté ou bombé au moins dans certaines zone, pénètrent dans le deuxième cadre (2) de telle sorte que les axes (17, 7) que les charnières de pivotement (16, 6) respectives des portions transversales (14, 4) viennent reposer sur un axe commun (7, 17), de sorte que les deux cadres partiels (12, 2) peuvent pivoter conjointement autour de cet axe commun (7, 17) afin d'amener le dispositif pare-vent (1) dans la position de conservation.

2. Dispositif pare-vent (1) selon la revendication 1, **caractérisé en ce que** le premier cadre (12) est un cadre coupe-vent (12) destiné à être installé dans le véhicule et le deuxième cadre (2) un cadre de recouvrement (2) destiné à recouvrir l'espace intérieur du véhicule derrière le siège du conducteur et du passage.

3. Dispositif pare-vent selon l'une des revendications précédentes, **caractérisé en ce que** dans la position intermédiaire, les portions longitudinales (13) du premier cadre (12), sur une grande partie de leur longueur, se terminent à fleur des portions longitudinales (3) du deuxième cadre (2) ou font saillie au-dessus de celles-ci.

4. Dispositif pare-vent selon l'une des revendications précédentes, caractérisé en ce des zones des portions transversales (14) du premier cadre (12), avant que ces portions transversales ne pénètrent dans le deuxième cadre (2), se terminent à fleur des portions transversales (4) du deuxième cadre (2) ou font saillie au-dessus de celles-ci.

5. Dispositif pare-vent selon l'une des revendications précédentes, **caractérisé en ce qu'**aussi en bien position d'utilisation qu'à l'état déposé du premier cadre (12) sur le premier cadre (2) (position intermédiaire), au moins les extrémités des portions transversales (14) des deux cadres partiels (12a, 12b) du premier cadre (12) qui sont reliées aux charnières de pivotement (6, 16) adoptent un angle (α) inférieur à 180°, de préférence sous une forme symétrique en V.

6. Dispositif pare-vent selon la revendication précédente, **caractérisé en ce que** les portions transversales (14) des deux cadres partiels (12a, 12b) du premier cadre (12) produisent sur toute leur longueur une forme symétrique en V.

7. Dispositif pare-vent selon l'une des revendications précédentes, **caractérisé en ce que** les portions transversales (14) des deux cadres partiels (12a, 12b) du premier cadre (12), à la fois en position d'utilisation et à l'état déposé du premier cadre (12) sur le premier cadre (2) (position intermédiaire), s'étendent de l'extérieur vers l'intérieur tout d'abord dans certaines zones parallèlement aux portions transversales (4) des deux cadres partiels (2a, 2b) du deuxième cadre (2) pour ensuite transiter dans les zones ayant un profilé incliné ou bombé par rapport auxdites portions transversales (4).

8. Dispositif pare-vent selon la revendication précédente, **caractérisé en ce que** les portions transversales (14) des deux cadres partiels (12a, 12b) du premier cadre (12) présentent un profilé incliné ou bombé entre deux profilés parallèles aux portions transversales (4) des deux cadres partiels (2a, 2b) du deuxième cadre (2).

9. Dispositif pare-vent selon l'une des revendications précédentes, **caractérisé en ce qu'**en position d'utilisation, le premier cadre (12) est dressé sur le deuxième cadre (2).

10. Dispositif pare-vent selon l'une des revendications précédentes, **caractérisé en ce que** dans les portions longitudinales (3) du deuxième cadre (2), face à l'espace intérieur du cadre, se trouvent des surfaces d'appui (3a) qui s'étendent en biais et sur lesquelles viennent s'appuyer les portions longitudinales (13) du premier cadre (12).

11. Dispositif pare-vent selon l'une des revendications précédentes, **caractérisé en ce qu'**en position d'utilisation du dispositif pare-vent (1), les deux cadres partiels (2a, 2b) du deuxième cadre (2) peuvent être immobilisés l'un par rapport à l'autre au moyen d'un dispositif de verrouillage (20).

12. Dispositif pare-vent selon l'une des revendications précédentes, **caractérisé en ce que** le dispositif de verrouillage (20) est monté pivotant sur le deuxième cadre (2), le dispositif de verrouillage (20) comprenant de préférence au moins deux éléments de verrouillage (21 a, 21 b) mobiles l'un par rapport à l'autre, les deux éléments de verrouillage (21 a, 21 b) étant respectivement montés sur un cadre partiel (2a, 2b) du deuxième cadre (2) de manière à pouvoir pivoter autour d'un axe de pivotement commun (24), et les deux éléments de verrouillage (21 a, 21 b) eux-mêmes étant reliés l'un à l'autre au moyen d'une articulation tournante (22) de manière à pouvoir pivoter autour d'un axe de pivotement (23).

13. Dispositif pare-vent selon l'une des revendications précédentes, **caractérisé en ce qu'**en position de conservation, l'axe de pivotement (23) de l'articulation tournante (22) qui relie les deux éléments de verrouillage (21 a, 21 b) vient se placer en coïncidence avec les axes (17, 7) de la charnière de pivotement (16, 6) correspondance des portions transversales (14, 4) du premier et du deuxième cadre (12, 2) sur un axe commun (7, 17, 23).
